# EUROPÄISCHE PATENTSCHRIFT

(11) **EP 4 001 028 B1**
(45) Veröffentlichungstag und Bekanntmachung des Hinweises auf die Patenterteilung: **31.01.2024**
(21) Anmeldenummer: 21195448.2
(22) Anmeldetag: 08.09.2021
(51) Int. Cl.: B60T 7/10, G05G 1/04, G05G 7/04

(54) **HANDBREMSBETÄTIGUNGSVORRICHTUNG**
HAND BRAKE ACTUATING DEVICE
DISPOSITIF DE COMMANDE DE FREIN À MAIN

(30) Priorität: 16.11.2020 DE 102020130248
(43) Veröffentlichungstag der Anmeldung: 25.05.2022
(73) Patentinhaber: CLAAS Tractor S.A.S., 78141 Vélizy-Villacoublay Cedex (FR)
(72) Erfinder: Hamel, Romain, 92290 Châtenay-Malabry (FR); Poret, Jérôme, 72000 Le Mans (FR)
(74) Vertreter: CLAAS Gruppe

(56) Entgegenhaltungen:
- EP-A1- 3 437 943
- DE-A1- 2 553 228
- US-A- 3 798 995

## Beschreibung

Die vorliegende Betätigung betrifft eine manuell zu bedienende Betätigungsvorrichtung für eine Bremse eines Fahrzeugs, insbesondere eines landwirtschaftlichen Fahrzeugs wie etwa eines Traktors, Feldhäckslers, Mähdreschers o.dgl.

Derartige Fahrzeuge haben ein erheblich höheres Gewicht als etwa PKWs, so dass eine Bremse zu ihrer Sicherung auf abschüssigem Untergrund entsprechend größere Reibkräfte erzeugen muss. Um große Reibkräfte mit der begrenzten Körperkraft eines Benutzers erzeugen zu können, sind Bremsbetätigungsvorrichtungen mit veränderlicher Übersetzung entwickelt worden, die es ermöglichen, im Laufe der Bewegung eines Bremshebels von einer Ruhestellung in eine aktive Stellung zunächst mit relativ hoher Übersetzung den Spalt zwischen den Reibflächen einer Bremse zu schließen sowie eventuelle andere Spiele zu überwinden und anschließend mit niedriger Übersetzung den nötigen Anpressdruck zwischen den Reibflächen aufzubauen.

So offenbart DE 25 53 228 A1 eine Bremsbetätigungsvorrichtung mit einem Gestell, einem Bremshebel, der an dem Gestell um eine Achse schwenkbar angelenkt ist, und einem Anschlusselement zum Übertragen einer Bewegung des Bremshebels auf eine Bremse. Indem das Anschlusselement im Laufe eines Anziehens des Bremshebels zur Achse wandert, wird das Übersetzungsverhältnis im Laufe der Bewegung kleiner, und der Anpressdruck wächst stärker als linear mit dem vom Benutzer auf den Bremshebel ausgeübten Drehmoment.

Um die Radialbewegung des Anschlusselements zu erreichen, umfasst das Anschlusselement dieser herkömmlichen Bremsbetätigungsvorrichtung einen Stift, der sich durch Schlitze des Gestells und des Bremshebels erstreckt. Diese kreuzen einander insbesondere zu Beginn der Auslenkung des Bremshebels aus der Ruhestellung unter einem kleinen Winkel, so dass erhebliche Reibkräfte auftreten und eine Selbsthemmung nicht ausgeschlossen ist.

Weiterhin ist aus der EP 3 437 943 A1 eine Handbremsbetätigungseinrichtung gemäß dem Oberbegriff des unabhängigen Patentanspruchs 1 bekannt.

Eine Aufgabe der Erfindung ist, eine Handbremsbetätigungsvorrichtung bereitzustellen, der einfach und robust aufgebaut ist und dessen Bremshebel in jeder Stellung zuverlässig und leicht gängig ist.

Die Aufgabe wird gelöst, indem bei einer Handbremsbetätigungsvorrichtung zum Betätigen einer Bremse eines insbesondere landwirtschaftlichen Fahrzeugs, mit einem Gestell, einem Bremshebel, der an dem Gestell um eine Achse schwenkbar angelenkt ist, und einem Anschlusselement zum Übertragen einer Bewegung des Bremshebels auf eine Bremse das Anschlusselement an einer Kulisse des Bremshebels zwischen einer Position fern der Achse und einer Position nah der Achse bewegbar ist und ein Koppelglied einerseits an dem Anschlusselement und andererseits an einem von der Achse entfernten Punkt des Gestells angreift. Mit Hilfe des Koppelgliedes kann eine an die Schwenkbewegung des Bremshebels gekoppelte Radialbewegung des Anschlusselements angetrieben, gleichzeitig aber eine diese Radialbewegung erschwerende Klemmung des Anschlusselements vermieden werden.

Um die vom Benutzer auszuübende Kraft trotz zunehmendem Widerstands der Bremse niedrig zu halten, sollte das Koppelglied angeordnet sein, um bei einem Auslenken des Bremshebels aus einer Ruhestellung das Anschlusselement an die Achse anzunähern.

Erfindungsgemäß umfass ein solches Koppelglied eine Stange, von der ein Ende mit dem Anschlusselement verbunden ist und das andere an das Gestell angelenkt ist. Gemäß eines Ausführungsbeispiels ist als Koppelglied auch ein flexibler aber unter Zugbelastung im Wesentlichen nicht dehnbarer Körper, z.B. ein Seil, oder eine Blattfeder, denkbar.

Die Kulisse sollte an einem bezogen auf die Achse radial inneren Ende und/oder radial äußeren Ende einen Anschlag aufweisen. Wenn das Koppelglied an den radial inneren Anschlag der Kulisse anstößt, kann es einen Teil des vom Benutzer auf den Bremshebel ausgeübten Drehmoments ausgleichen und so die vom Anschlusselement auf die Bremse übertragene Kraft begrenzen. So kann eine Überlastung einer Übertragungsstrecke zwischen dem Anschlusselement und der Bremse auch bei sehr kleinem Abstand zwischen dem Anschlusselement und der Achse verhindert werden. Ein Anschlag an ein radial äußeres Ende der Kulisse kann insbesondere bei einem starren Koppelglied eine Ruhestellung des Bremshebels definieren.

Um einerseits die Reibflächen der Bremse schnell in Kontakt bringen zu können und andererseits nach Herstellung des Kontakts eine hohe Reibung zwischen ihnen erzielen zu können, sollte die Bewegungsfreiheit des Anschlusselements in radialer Richtung entlang der Kulisse mindestens ein Drittel des Abstands von Anschlusselement und Achse in der Ruhestellung betragen.

Die Längsrichtung der Kulisse und das Koppelglied sollten in der Ruhestellung einen Winkel von mindestens 30° und/oder höchstens 60° aufspannen. Wenn der Winkel kleiner als 30° ist, ist die Veränderung des Übersetzungsverhältnisses beim Schwenken des Bremshebels ungünstig klein; ist er größer als 60°, so kann auch bei der erfindungsgemäßen Handbremsbetätigungsvorrichtung Reibung die Schwenkbewegung des Bremshebels behindern.

Zum Übertragen einer Betätigungskraft auf die Bremse kann eine Übertragungsstrecke zwischen Anschlusselement und Bremse einen Seilzug umfassen.

Das Anschlusselement einen an der Kulisse geführten Gleiter und eine den Gleiter mit dem Seilzug verbindende Stange umfassen. Die Länge der Stange kann so bemessen sein, dass sie in jeder Stellung des Bremshebels einen Zwischenraum zwischen diesem und einem Unterbau, auf dem das Gestell montiert ist, überbrückt und mit einem am Seilzug befestigten Ende in den Unterbau eingreift. Der Seilzug ist daher in jeder Stellung des Bremshebels im Unterbau vor Beschädigung geschützt.

Der Bremshebel kann ein U-Profil, z.B. aus einem Blechzuschnitt, mit zwei einander gegenüberliegenden Schenkeln umfassen. Die zwei Schenkel können das Gestell beidseitig umgreifen. Ein die Achse definierender Stift kann dann Löcher der beiden Schenkel und des dazwischenliegenden Gestell durchsetzen. Die Kulisse kann durch ein Paar von Schlitzen in den beiden Schenkeln gebildet sein. Die Schlitze können einen Gleiter des Anschlusselements verschiebbar aufnehmen. Von der Stange des Anschlusselements und dem Koppelglied kann jeweils eines zwischen den Schenkeln am Gleiter angreifen und das andere über eine Gabel mit dem Gleiter verbunden oder doppelt vorhanden sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine erfindungsgemäße Handbremsbetätigungsvorrichtung mit einem Bremshebel in Ruhestellung, und
- Fig. 2: die Handbremsbetätigungsvorrichtung mit ausgelenktem Bremshebel.

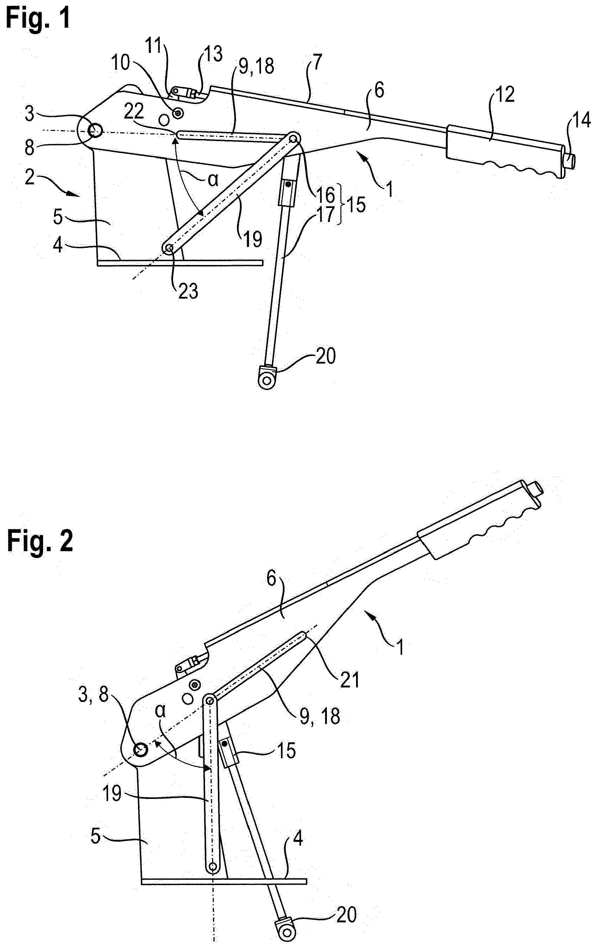

Fig. 1 zeigt eine erfindungsgemäße Handbremsbetätigungsvorrichtung in einer Seitenansicht. Die Handbremsbetätigungsvorrichtung umfasst einen Bremshebel 1 und ein Gestell 2, an dem der Bremshebel 1 um eine Achse 3 schwenkbar angelenkt ist. Das Gestell 2 umfasst eine Grundplatte 4 zur Befestigung an einem nicht gezeigten Unterbau, z.B. in einer Fahrerkabine eines Traktors, und einen von der Grundplatte 4 aufragenden platten- oder flach kastenförmigen Schaft 5.

Der Bremshebel 1 umfasst einen langgestreckten, im Querschnitt U-förmig gebogenen Blechzuschnitt mit zwei kongruenten parallelen ebenen Schenkeln 6 auf beiden Seiten einer nach oben gekehrten Rundung 7. In der Ansicht der Fig. 1 und 2 ist jeweils einer der Schenkel 6 hinter dem anderen verborgen. Achsnahe Bereiche der Schenkel 6 umgreifen ein oberes Ende des Schafts 5. Ein Bolzen 8 ist in Löchern der beiden Schenkel 6 und des dazwischenliegenden Schafts 5 aufgenommen, um die Achse 3 zu definieren.

Miteinander fluchtende Schlitze 9 in den beiden Schenkeln 6 erstrecken sich zwischen einem zur Achse 3 benachbarten und einem von der Achse 3 abgewandten Ende. Im hier gezeigten Fall verlaufen die Schlitze geradlinig in Richtung eines Radius der Achse 3; gekrümmte und/oder schräg zum Radius orientierte Verläufe kommen ebenfalls in Betracht. Die Schenkel 6 verbergen ein Sägezahnprofil an einer den Schlitzen 9 zugewandten Seite des Schafts 5.

Ein weiterer in Löchern der Schenkel 6 fixierter Bolzen 10 definiert eine Drehachse eines zweiarmigen Hebels 11. Der Hebel 11 ist bis auf das Ende eines ersten seiner Arme zwischen den Schenkeln 6 verborgen; ein freies Ende seines zweiten Arms ist zum Sägezahnprofil hin federbeaufschlagt, um zusammen mit diesem einen Ratschenmechanismus zu bilden, der in an sich bekannter Weise ein Schwenken des Bremshebels 1 aus der Ruhestellung im Gegenuhrzeigersinn zulässt und dann durch Eingreifen der Spitze in das Sägezahnprofil den Bremshebel 1 in ausgelenkter Stellung fixiert.

Eine Manschette 12 aus Kunststoff ist auf ein freies Ende des Blechzuschnitts aufgeschoben, einerseits um als Griffkörper zu dienen, der eine bequeme Handhabung des Bremshebels 1 ermöglicht, andererseits um als Führung für eine Steuerstange 13 zu dienen, die sich zwischen den Schenkeln 6 in Längsrichtung des Bremshebels 1 erstreckt und das Ende des ersten Arms des Hebels 11 mit einem Entsperrknopf 14 an der Spitze des Bremshebels 1 so verbindet, dass durch Drücken auf den Entsperrknopf 14 der Eingriff der Spitze in das Sägezahnprofil aufgehoben und der Bremshebel 1 in die Ruhestellung zurückgeschwenkt werden kann.

Ein Anschlusselement 15, das den Bremshebel 1 mit einer nicht dargestellten Bremse verbindet, umfasst einen in den Schlitzen 9 verschiebbar aufgenommenen Gleiter 16 und eine von dem Gleiter 16 rechtwinklig abstehende Stange 17. Der Gleiter 16 kann insbesondere zylindrisch geformt sein. Indem sich die Stange 17 zwischen den Schenkeln 6 erstreckt, schränkt sie die Bewegungsfreiheit des Gleiters 16 in Richtung seiner Längsachse so weit ein, dass dieser nicht durch eine Bewegung in Längsrichtung aus den Schlitzen 9 entweichen kann. Die Schlitze 9 bilden eine Kulisse 18, in der der Gleiter 16 quer zu seiner Längsachse verschiebbar ist. Das vom Gleiter 16 abgewandte Ende 20 der Stange 17 ist mit einem in der Fig. nicht dargestellten, die Bremse betätigenden Zugseil eines Bowdenzugs verbunden. Spitzen des Gleiters 16 stehen auf beiden Seiten über die Schenkel 6 des Bremshebels 1 über. Ein Koppelglied 19 ist durch zwei Stangen gebildet, von denen jeweils ein Ende am Gleiter 16 befestigt und das andere an einem Punkt 23 des Gestells 2, hier am Schaft 5 benachbart zur Grundplatte 4, angelenkt ist.

In der Ruhestellung der Fig. 1 befindet sich der Gleiter 16 an einem achsfernen Ende 21 der Schlitze 9. Die Schlitze 9 und die Stangen des Koppelgliedes 19 spannen einen Winkel α von ca. 45° auf.

Wenn der Bremshebel 1 aufwärts geschwenkt wird, zieht gleichzeitig das Koppelglied den Gleiter 16 in Richtung der Achse 3. Die Stange 17 wird aufwärts bewegt und zieht dabei das Zugseil mit; gleichzeitig wird der Hebelarm, mit dem das Zugseil angetrieben wird, immer kürzer. Infolgedessen nimmt die Kraft, die ein Benutzer zum Schwenken des Bremshebels 1 auf diesen ausüben muss, weniger stark zu als die Spannung des Zugseils und die dadurch erzeugte Anpresskraft zwischen Reibflächen der Bremse.

Im Laufe der Schwenkbewegung nimmt der Winkel α zu, bleibt aber deutlich unter 90°, z.B. unter 75°, so dass nicht versehentlich bei Erreichen des Anschlags 22 eine Zugspannung in dem Koppelglied 19 auftreten kann, die zu strukturellen Schäden an der Handbremsbetätigungsvorrichtung führen könnten. Die mit dem Schwenken des Bremshebels einhergehende Verkürzung des Hebelarms ist nicht so stark, dass sie den beim Anziehen der Bremse zunehmenden Widerstand des Bremshebels 1 kompensieren könnte. Der Benutzer kann daher an einer Zunahme dieses Widerstands sicher erspüren, wann die Bremse fest genug angezogen ist.

Fig. 2 zeigt den Bremshebel 1 in einer maximal ausgelenkten Stellung. Der Bremshebel 1 ist in dieser Stellung durch den Ratschenmechanismus fixiert. Der Gleiter 16 befindet sich an einem achsnahen Ende 22 der Schlitze 9. Dessen Abstand von der Achse 3 beträgt weniger als die Hälfte des Abstands des achsfernen Endes 21. Das Ende 20 der Stange 17 befindet sich auch in dieser Stellung unterhalb der Grundplatte 4, so dass das Zugseil geschützt ist. Der Abstand des Gleiters 16 von der Achse 3 beträgt weniger als die Hälfte des Abstands in der Ruhestellung der Fig. 1.

Einer vereinfachten Ausgestaltung zufolge ist das Anschlusselement 15 allein durch den Gleiter 16 gebildet und das Zugseil direkt an diesem befestigt. Die Stange 17 kann dann entfallen.

### Bezugszeichen

- 1: Bremshebel
- 2: Gestell
- 3: Achse
- 4: Grundplatte
- 5: Schaft
- 6: Schenkel
- 7: Rundung
- 8: Bolzen
- 9: Schlitz
- 10: Bolzen
- 11: Hebel
- 12: Manschette
- 13: Steuerstange
- 14: Entsperrknopf
- 15: Anschlusselement
- 16: Gleiter
- 17: Stange
- 18: Kulisse
- 19: Koppelglied
- 20: Ende (von 17)
- 21: achsfernes Ende (von 9)
- 22: achsnahes Ende (von 9)
- 23: Punkt

## Patentansprüche

1. Handbremsbetätigungsvorrichtung zum Betätigen einer Bremse eines insbesondere landwirtschaftlichen Fahrzeugs, mit einem Gestell (2), einem Bremshebel (1), der an dem Gestell (2) um eine Achse (3) schwenkbar angelenkt ist, und einem Anschlusselement (15) zum Übertragen einer Bewegung des Bremshebels (1) auf eine Bremse, wobei das Anschlusselement (15) an einer Kulisse (18) des Bremshebels (1) zwischen einer Position (21) fern der Achse (3) und einer Position (22) nah der Achse (3) bewegbar ist und ein Koppelglied (19) einerseits an dem Anschlusselement (15) und andererseits an einem von der Achse (3) entfernten Punkt (23) des Gestells (2) angreift, **dadurch gekennzeichnet, dass** das Koppelglied (19) eine Stange umfasst, von der ein Ende mit dem Anschlusselement (15) verbunden ist und das andere an das Gestell (2) angelenkt ist.

2. Handbremsbetätigungsvorrichtung nach Anspruch 1, **dadurch gekennzeichnet, dass** das Koppelglied (19) angeordnet ist, um bei einem Auslenken des Bremshebels (1) aus einer Ruhestellung das Anschlusselement (15) an die Achse (3) anzunähern.

3. Handbremsbetätigungsvorrichtung nach Anspruch 1 oder 2, **dadurch gekennzeichnet, dass** die Kulisse (18) an einem der Achse (3) benachbarten Ende (22) und/oder einem von der Achse (3) abgewandten Ende (21) einen Anschlag aufweist, der die Bewegungsfreiheit des Anschlusselements (15) begrenzt.

4. Handbremsbetätigungsvorrichtung nach Anspruch 1, 2 oder 3, **dadurch gekennzeichnet, dass** die Bewegungsfreiheit des Anschlusselements (15) in radialer Richtung mindestens ein Drittel des Abstands von Anschlusselement (15) und Achse (3) in der Ruhestellung beträgt.

5. Handbremsbetätigungsvorrichtung nach einem der Ansprüche 1 bis 4, **dadurch gekennzeichnet, dass** in der Ruhestellung die Längsrichtung der Kulisse (18) am Ort des Anschlusselements (15) und das Koppelglied (19) einen Winkel von mindestens 30° und/oder höchstens 60° aufspannen.

6. Handbremsbetätigungsvorrichtung nach einem der vorhergehenden Ansprüche, **dadurch gekennzeichnet, dass** an dem Anschlusselement (15) ein sich zu der Bremse hin erstreckender Seilzug angeschlossen ist.

7. Handbremsbetätigungsvorrichtung nach Anspruch 6, **dadurch gekennzeichnet, dass** das Anschlusselement (15) einen an der Kulisse (18) geführten Gleiter (16) und eine den Gleiter (16) mit dem Seilzug verbindende Stange (17) umfasst.

8. Handbremsbetätigungsvorrichtung nach einem der vorhergehenden Ansprüche, **dadurch gekennzeichnet, dass** der Bremshebel (1) ein U-Profil mit zwei Schenkeln (6) umfasst, und dass die zwei Schenkel (6) das Gestell (2) beidseitig umgreifen und/oder die Kulisse (18) durch ein Paar von Schlitzen (9) in den beiden Schenkeln (6) gebildet ist.

## Claims

1. Handbrake actuating device for actuating a brake of a vehicle, in particular an agricultural vehicle, having a frame (2), a brake lever (1) which is articulated on the frame (2) so as to be pivotable about an axle (3), and a connecting element (15) for transmitting a movement of the brake lever (1) to a brake, wherein the connecting element (15) is movable on a link (18) of the brake lever (1) between a position (21) remote from the axle (3) and a position (22) close to the axle (3) and a coupling member (19) engages on the one hand on the connecting element (15) and on the other hand on a point (23) of the frame (2) remote from the axle (3), **characterised in that** the coupling member (19) comprises a rod, one end of which is connected to the connecting element (15) and the other end of which is articulated to the frame (2).

2. Handbrake actuating device according to claim 1, **characterised in that** the coupling element (19) is arranged to bring the connecting element (15) closer to the axle (3) when the brake lever (1) is deflected from a rest position.

3. Handbrake actuating device according to claim 1 or 2, **characterised in that** the link (18) has a stop at an end (22) adjacent to the axle (3) and/or an end (21) facing away from the axle (3), which limits the freedom of movement of the connecting element (15).

4. Handbrake actuating device according to claim 1, 2 or 3, **characterised in that** the freedom of movement of the connecting element (15) in the radial direction is at least one third of the distance between the connecting element (15) and the axle (3) in the rest position.

5. Handbrake actuating device according to one of claims 1 to 4, **characterised in that**, in the rest position, the longitudinal direction of the link (18) at the location of the connecting element (15) and the coupling element (19) form an angle of at least 30° and/or at most 60°.

6. Handbrake actuating device according to one of the preceding claims, **characterised in that** a cable extending towards the brake is connected to the connecting element (15).

7. Handbrake actuating device according to claim 6, **characterised in that** the connecting element (15) comprises a slider (16) guided on the link (18) and a rod (17) connecting the slider (16) to the cable.

8. Handbrake actuating device according to one of the preceding claims, **characterised in that** the brake lever (1) comprises a U-profile with two limbs (6), and **in that** the two limbs (6) embrace the frame (2) on both sides and/or the link (18) is formed by a pair of slots (9) in the two limbs (6).

## Revendications

1. Dispositif d'actionnement de frein à main pour l'actionnement d'un frein d'un véhicule en particulier agricole, comprenant un bâti (2), un levier de frein (1) qui est articulé sur le bâti (2) de manière pivotable autour d'un axe (3), et un élément de liaison (15) pour la transmission d'un déplacement du levier de frein (1) à un frein, l'élément de liaison (15) étant déplaçable sur une coulisse (18) du levier de frein (1) entre une position (21) éloignée de l'axe (3) et une position (22) proche de l'axe (3), et un organe de couplage (19) agissant d'une part sur l'élément de liaison (15) et d'autre part sur un point (23) du bâti (2) éloigné de l'axe, **caractérisé en ce que** l'organe de couplage (19) inclut une tige dont une extrémité est reliée à l'élément de liaison (15) et dont l'autre extrémité est articulée sur le bâti (2).

2. Dispositif d'actionnement de frein à main selon la revendication 1, **caractérisé en ce que** l'organe de couplage (19) est disposé pour rapprocher l'élément de liaison (15) de l'axe (3) en cas d'éloignement du levier de frein (1) d'une position de repos.

3. Dispositif d'actionnement de frein à main selon la revendication 1 ou 2, **caractérisé en ce que** la coulisse (18) comporte, à une extrémité (22) voisine de l'axe (3) et/ou à une extrémité (21) située à l'opposé de l'axe (3), une butée qui limite la liberté de déplacement de l'élément de liaison (15).

4. Dispositif d'actionnement de frein à main selon la revendication 1, 2 ou 3, **caractérisé en ce que** la liberté de déplacement de l'élément de liaison (15) dans la direction radiale est égale à au moins un tiers de l'écartement de l'élément de liaison (15) et de l'axe (3) dans la position de repos.

5. Dispositif d'actionnement de frein à main selon une des revendications 1 à 4, **caractérisé en ce que**, dans la position de repos, la direction longitudinale de la coulisse (18) au niveau de l'élément de liaison (15) et l'organe de couplage (19) forment un angle d'au moins 30° et/ou d'au plus 60°.

6. Dispositif d'actionnement de frein à main selon une des revendications précédentes, **caractérisé en ce qu'**à l'élément de liaison (15) est relié un câble de commande s'étendant en direction du frein.

7. Dispositif d'actionnement de frein à main selon la revendication 6, **caractérisé en ce que** l'élément de liaison (15) inclut un coulisseau (16) guidé sur la coulisse (18) et une tige (17) reliant le coulisseau (16) au câble de commande.

8. Dispositif d'actionnement de frein à main selon une des revendications précédentes, **caractérisé en ce que** le levier de frein (1) inclut un profil en U avec deux ailes (6), et **en ce que** les deux ailes (6) enserrent le bâti (2) de part et d'autre et/ou la coulisse (18) est formée par une paire de fentes (9) dans les deux ailes (6).
